**Europäisches Patentamt**

**European Patent Office**

**Office européen des brevets**

(11) Veröffentlichungsnummer: **0 171 508 B1**

(12) # EUROPÄISCHE PATENTSCHRIFT

(45) Veröffentlichungstag der Patentschrift: **11.09.91**

(51) Int. Cl.⁵: **H01R 43/28**

(21) Anmeldenummer: **85104188.9**

(22) Anmeldetag: **05.04.85**

(54) Transportvorrichtung für einen Kabelkonfektionierungsautomaten.

(30) Priorität: **07.08.84 DE 3429054**

(43) Veröffentlichungstag der Anmeldung:
**19.02.86 Patentblatt 86/08**

(45) Bekanntmachung des Hinweises auf die
Patenterteilung:
**11.09.91 Patentblatt 91/37**

(84) Benannte Vertragsstaaten:
**FR GB IT NL SE**

(56) Entgegenhaltungen:
**GB-A- 2 118 126**

(73) Patentinhaber: **Jürgenhake, Bernhard, Dr.-Ing.**
**Im Brok 45**
**W-4782 Erwitte-Völlinghausen(DE)**

(72) Erfinder: **Jürgenhake, Bernhard, Dr.-Ing.**
**Im Brok 45**
**W-4782 Erwitte-Völlinghausen(DE)**

## Beschreibung

Die Erfindung bezieht sich auf eine Transportvorrichtung für einen Kabelkonfektionierungsautomaten, bestehend aus einem vor der Ablängvorrichtung angeordneten ersten Förderer, der das von einer Rolle abgewickelte Kabel in Richtung seiner Längsachse transportiert und aus einem zweiten hinter der Ablängvorrichtung angeordneten Förderer, der von zwei Endlosriemen gebildet wird, die das Kabel zwischen sich einklemmend senkrecht zur Kabelachse weitertransportieren und aus einem Schieber, der das Kabel senkrecht zu seiner Längsachse in den Einlauf der beiden Endlosriemen schiebt.

Aus der DE-OS 32 43 906 ist eine Transportvorrichtung für einen Kabelkonfektionierungsautomaten bekannt, bei dem der zweite Förderer aus zwei Endlosriemen gebildet wird, die das Kabel zwischen sich einklemmend senkrecht zur Kabelachse transportieren. Das Einfügen der Kabel zwischen die beiden Endlosriemen wird dadurch ermöglicht, daß die beiden Endlosriemen durch eine Trenneinrichtung voneinander abgehoben werden und das Kabel durch Verschieben in Achsrichtung zwischen die beiden benachbarten Abschnitte der Endlosriemen geschoben wird und anschließend die beiden Endlosriemen wieder zusammengefahren werden. Die für das Einfügen des Kabels zwischen die beiden benachbarten Abschnitte der Endlosriemen erforderliche Trennvorrichtung ist in ihrem Aufbau aufwendig und in ihrer Funktion umständlich und reparaturanfällig. Außerdem werden hierbei große Massen bewegt, so daß entweder große Beschleunigungskräfte oder lange Taktzeiten erforderlich sind.

Zur Behebung dieses Nachteils ist in der europäischem Patentanmeldung EP-A-0163 849 eine Schiebervorrichtung vorgesehen, die das Kabel quer zu seiner Längsachse zwischen die benachbarten Abschnitte der Endlosriemen schiebt. Um das Kabel hinsichtlich seiner Längsausdehnung richtig zwischen den beiden benachbarten Abschnitten des Endlosriemens positionieren zu können, ist es wichtig, daß das Kabel erst dann abgelängt wird, wenn es bereits von den beiden Endlosriemen erfaßt ist. Das bedeutet jedoch, daß der abzulängende Kabelabschnitt aus der Achse des zugeführten Kabels herausgeschwenkt wird. Um bei diesem Herausschwenken eine Deformation des Kabels zu vermeiden, und um den Anfang des in einen Führungskanal, in den der Schieber eingreift, einzuschiebenden Kabels wieder in die vorgeschriebene Position zu bringen, wird gemäß der Erfindung vorgeschlagen, daß zwischen dem ersten Förderer und der Ablängvorrichtung eine das Kabel umgebende Führungshülse angeordnet ist, die beim Einschieben des Kabels zwischen die beiden Endlosriemen der Bewegungsrichtung des Schiebers folgt.

Bei einer vorteilhaften Ausgestaltung der Erfindung wird die Führungshülse entsprechend der Bewegungsrichtung des Schiebers verschwenkt. Dabei ist es zweckmäßig, die Schwenkachse nahe der Eingangsöffnung der Führungshülse zu legen. Dadurch ist es möglich, die Schwenkachse unmittelbar an die Führungshülse anzuformen. Es ist jedoch auch möglich, die Schwenkachse aus der Einschieberichtung des Kabels gesehen weiter vor der Hülse anzuordnen. In diesem Fall müßte jedoch eine umständliche Hebelanordnung vorgesehen werden.

Bei einer weiteren vorteilhaften Ausgestaltung der Erfindung ist die Führungshülse kraftschlüssig mit dem Schieber gekoppelt, und die kraftschlüssige Kopplung zwischen der Führungshülse und dem Schieber wird mit Beginn des Schneidprogramms aufgehoben. Dabei fährt die Führungshülse gegen einen feststehenden Anschlag, während der Schieber weiter vorfährt. Dadurch wird erreicht, daß die Führungshülse nur soweit verschwenkt wird, bis das Kabel in der Ablängvorrichtung an dem feststehenden Messer zur Anlage kommt und das bewegliche Messer den Schneidvorgang durchführen kann, ohne daß das Führungsrohr noch weiter verschwenkt wird.

Um die Bewegungsvorgänge von Schieber und dem beweglichen Messer der Ablängvorrichtung genau zu koordinieren, ist es zweckmäßig, das bewegliche Messer der Ablängvorrichtung fest mit dem Schieber zu verbinden. Es kann sogar zweckmäßig sein, die zur Ablängvorrichtung weisende Seite des Schiebers unmittelbar als Messer der Ablängvorrichtung auszuführen.

Die kraftschlüssige Verbindung zwischen der verschwenkbaren Führungshülse und dem Schieber wird zweckmäßigerweise dadurch geschaffen, daß die schwenkbare Führungshülse durch Federkraft in Schneidrichtung gegen einen mit dem Schieber verbundenen Anschlag gezogen oder gedrückt und mit Beginn des Schneidvorganges von diesem abgehoben wird. Dieses Abheben der Führungshülse von dem mit dem Schieber verbundenen Anschlag erfolgt dadurch, daß die Führungshülse gegen einen feststehenden Anschlag anschlägt und der Schieber weiterfährt.

Bei einer anderen Ausführungsform ist die Führungshülse formschlüssig mit einem beweglichen Teil der Ablängvorrichtung und dieser wiederum kraftschlüssig mit dem Schieber verbunden. Dabei ist der mit dem verschwenkbaren Ende der Führungshülse befestigte und die Führungshülse verschwenkende Teil über eine Feder mit dem Schieber oder dem beweglichen Messer verbunden und wird beim Schneidvorgang von der Feder gegen einen feststehenden Anschlag gepreßt. Vorteilhaft ist, daß in den die Führungshülse verschwenkenden Teil ein Ringmesser eingearbeitet ist, das das beim Schneidvorgang feststehende Messer bildet.

Die Fig. 1 zeigt eine Prinzipdarstellung der beiden Förderer mit der dazwischen angeordneten Ablängeinrichtung und dem Führungsrohr während des Vortransports des Kabels in Achsrichtung und

Fig. 2 während des Schneidvorganges.

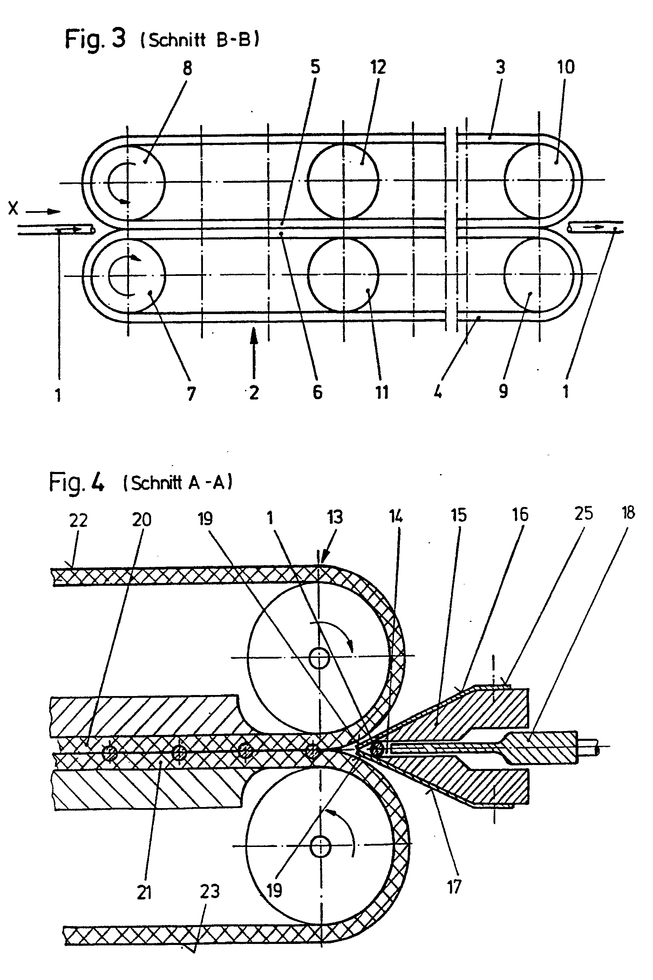

Fig. 3 stellt einen Schnitt nach der Linie B-B durch den ersten Förderer und

Fig. 4 einen Schnitt nach der Linie A-A durch den zweiten Förderer dar.

Fig. 5 und Fig. 6 zeigen zwei verschiedene Ausführungsformen der Verschwenkeinrichtung für das Führungsrohr.

Das Kabel 1 wird von einer nicht dargestellten Trommel abgewickelt und von dem ersten Förderer 2 in Richtung X transportiert. Dieser erste Förderer besteht aus einem Riemenpaar 3, 4, dessen Abschnitte 5, 6 das Kabel 1 zwischen sich einklemmen. Angetrieben wird der Riemenantrieb durch die Rollen 7, 8. Die Rollen 9, 10 bilden die Umlenkrollen, während die Rollen 11, 12 lediglich den Anpreßdruck der Riemenabschnitte 5, 6 an das weiterzutransportierende Kabel erhöhen. Von dem ersten Förderer 2 wird das Kabel 1 in den Kanal 14 geschoben, der von einer Längsnut in der Leiste 15 und von den Federblechen 16, 17 gebildet wird. Von der dem zweiten Förderer 13 abgewandten Seite her greift ein aus einem dickeren Blechstreifen gebildeter Schieber 18 in die Längsnut der Leiste 15 ein. Dieser Schieber 18 schiebt das Kabel 1 unter einem vorübergehenden federnden Abheben der Randbereiche 19 der Federbleche 16, 17 zwischen die aneinanderliegenden Abschnitte 20, 21 der den zweiten Förderer 13 bildenden Riemen 22, 23. Die Riemen 22, 23 sind aus elastischem Material oder zumindest weisen sie eine weichelastische Oberfläche auf, so daß das Kabel 1 soweit zwischen die aufeinanderliegenden Riemenabschnitte 20, 21 geschoben werden kann, daß das Kabel 1 sicher von dem Förderer 13 erfaßt wird. Nachdem das Kabel 1 durch den Schieber 18 in den zweiten Förderer 24 gepreßt ist, wird es durch die Ablängvorrichtung 24, 25 auf die gewünschte Länge geschnitten.

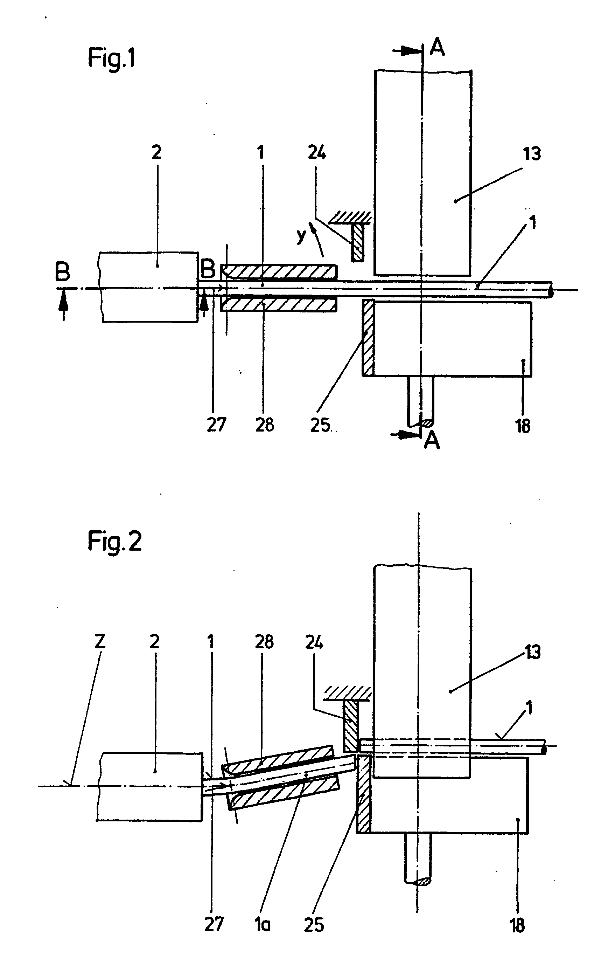

Wie aus Fig. 1 ersichtlich, ist zwischen dem ersten Förderer 2 und der Ablängvorrichtung 24, 25 ein Führungsrohr 28, durch das das Kabel 1 hindurchgeht, angeordnet. Dieses Führungsrohr 28 ist um die Achse 27 verschwenkbar gelagert und wird mit dem Hereinfahren des Schiebers 18 in den Einlauf der Riemenabschnitte 20, 21, wie in Fig. 2 dargestellt, so verschwenkt, daß das Kabel 1 an dem feststehenden Messer 24 der Ablängvorrichtung zur Anlage kommt. Mit dem Zurückfahren des Schiebers 18 wird auch das Führungsrohr 28 in die Ausgangslage, wie in Fig. 1 dargestellt, wieder zurückgeschwenkt. Das Führungsrohr hat die Aufgabe, zu verhindern, daß der Abschnitt 1a des Kabels aus der Kabelachse Z deformiert wird und nach dem Ablängen wieder in die Achse Z zurückgeführt wird, damit das freie Ende dieses Abschnittes 1 sicher in den Kanal 14 eingefädelt werden kann.

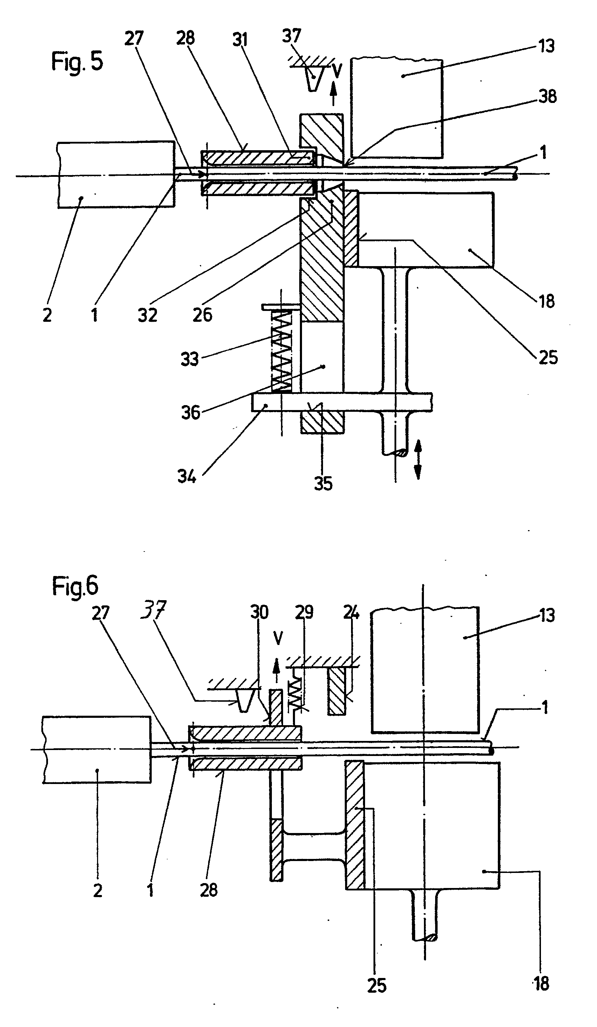

Bei der in Fig. 6 dargestellten Ausführungsform der Verschwenkvorrichtung wird die um die Achse 27 verschwenkbare Führungshülse 28 von der Zugfeder 29 gegen einen beweglichen Anschlag 30 gepreßt, der mit dem beweglichen Messer 25 und dem Schieber 18 starr gekoppelt ist. Beim Hereinfahren des Schiebers 18 in den Einlauf der beiden Abschnitte 20, 21 der Endlosriemen 22, 23 wird der bewegliche Anschlag 30 in Richtung V verstellt. Die Zugfeder 29 sorgt auch während des Verstellvorganges des Anschlags 30 für eine sichere Anlage der Führungshülse 28 an dem Anschlag 30, und zwar so lange, bis die Führungshülse 28 an den ortsfesten Anschlag 37 zur Anlage kommt. In dieser Position der Führungshülse liegt das Kabel 1 an dem feststehenden Messer 24 der Ablängvorrichtung an. Bei einem weiteren Vorschieben des beweglichen Messers 15 wird das Kabel 1 abgelängt. Während dieses Ablängvorganges hebt der bewegliche Anschlag 30 von der Führungshülse 28 ab. Während des Schneidvorganges, bei dem das Kabel 1 auf dem feststehenden Messer 24 aufliegt, wird die Führungshülse 28 nicht verschwenkt. Bei einem Zurückfahren des Schiebers 18 wird die Führungshülse 28 gegen die Kraft der Zugfeder 29 in die gezeichnete Ausgangslage zurückgezogen.

Bei der in Fig. 5 dargestellten Verschwenkvorrichtung der Führungshülse 28 greift das vordere verschwenkbare Ende 31 der Führungshülse 28 in eine Ausnehmung 32 eines mit dem Schieber 18 gekoppelten laschenförmigen Teiles 26 ein. Die Kopplung dieses Teiles 26 mit dem Schieber 18 ist kraftschlüssig, wobei eine Druckfeder 33 einen starr mit dem Schieber 18 gekoppelten Flansch 34 gegen den Rand 35 eine Ausnehmung 36 preßt. Beim Hereinfahren des Schiebers 18 in den Einlauf des Förderers 13 wird das laschenförmige Teil 26 über die Feder 33 in Richtung V soweit verschoben, bis es an dem feststehenden Anschlag 37 zur Anlage kommt. Dieses flanschförmige Teil 26 ist bei 38 als Ringmesser ausgebildet. In diesem Ringmesser wird das Kabel 1 von dem beweglichen Messer 25 abgeschnitten.

**Patentansprüche**

1.  Transportvorrichtung für einen Kabelkonfektionierungsautomaten, bestehend aus einem vor der Ablängvorrichtung angeordneten ersten Förderer (2), der das von einer Rolle abgewik-

kelte Kabel (1) in Richtung seiner Längsachse transportiert und aus einem zweiten hinter der Ablängvorrichtung (24,25,26) angeordneten Förderer (13), der von zwei Endlosriemen (22,23) gebildet wird, die das Kabel (1) zwischen sich einklemmend senkrecht zur Kabelachse weitertransportieren und aus einem Schieber (18), der das Kabel (1) senkrecht zu seiner Längsachse in den Einlauf der beiden Endlosriemen (22,23) schiebt, dadurch gekennzeichnet, daß zwischen dem ersten Förderer (2) und der Ablängvorrichtung (24, 25, 26) eine das Kabel (1) umgebende Führungshülse (28) angeordnet ist, die beim Einschieben des Kabels (1) zwischen die beiden Endlosriemen (22, 23) der Bewegungsrichtung des Schiebers (18) folgt.

2. Transportvorrichtung nach Anspruch 1, dadurch gekennzeichnet, daß die Führungshülse (28) entsprechend der Bewegungsrichtung des Schiebers (18) um eine Achse (27) verschwenkt wird.

3. Transportvorrichtung nach Anspruch 2, dadurch gekennzeichnet, daß die Schwenkachse (27) nahe der Eingangs-öffnung der Führungshülse (28) liegt.

4. Transportvorrichtung nach einem der vorstehenden Ansprüche, dadurch gekennzeichnet, daß die Führungshülse (28) kraftschlüssig mit dem Schieber (18) gekoppelt ist.

5. Transportvorrichtung nach einem der vorstehenden Ansprüche, dadurch gekennzeichnet, daß das bewegliche Messer (25) der Ablängvorrichtung fest mit dem Schieber (18) verbunden ist.

6. Transportvorrichtung nach Anspruch 5, dadurch gekennzeichnet, daß die zur Ablängvorrichtung (24, 25) weisende Seite des Schiebers (18) als Messer (25) der Ablängvorrichtung ausgeführt ist.

7. Transportvorrichtung nach einem der vorstehenden Ansprüche, dadurch gekennzeichnet, daß die kraftschlüssige Kopplung zwischen der Führungshülse (28) und dem Schieber (18) mit Beginn des Schneidvorganges aufgehoben wird und die Führungshülse (28) an einem Anschlag (37) zur Anlage kommt.

8. Transportvorrichtung nach einem der vorstehenden Ansprüche, dadurch gekennzeichnet, daß die schwenkbare Führungshülse (28) durch Federkraft in Schneidrichtung gegen einen mit dem Schieber (18) verbundenen Anschlag (30) gezogen oder gedrückt und mit Beginn des Schneidvorganges von diesem abgehoben wird.

9. Transportvorrichtung nach Anspruch 8, dadurch gekennzeichnet, daß das Abheben der Führungshülse (28) von dem mit dem Schieber (18) verbundenen Anschlag (30) dadurch erfolgt, daß die Führungshülse (28) gegen einen festen Anschlag (37) anschlägt und der Schieber (18) weiterfährt.

10. Transportvorrichtung nach einem der vorstehenden Ansprüche, dadurch gekennzeichnet, daß die Führungshülse (28) formschlüssig mit einem Teil (26) der Ablängvorrichtung und dieser wiederum kraftschlüssig mit dem Schieber (18) verbunden ist.

11. Transportvorrichtung nach einem der vorstehenden Ansprüche, dadurch gekennzeichnet, daß der mit dem verschwenkbaren Ende (31) der Führungshülse (28) befestigte und die Führungshülse verschwenkende Teil (26) über eine Feder (33) mit dem Schieber (18) oder dem beweglichen Messer (25) verbunden ist und beim Schneidvorgang von der Feder (33) gegen einen feststehenden Anschlag (37) gepreßt wird.

12. Transportvorrichtung nach Anspruch 11, dadurch gekennzeichnet, daß in den die Führungshülse (28) verschwenkenden Teil (26) ein Ringmesser (38) eingearbeitet ist, das das beim Schneidvorgang feststehende Messer bildet.

**Claims**

1. Transport device for an automatic cable preparing machine, consisting of a first conveyor (2), upstream of the length-cutting device, which transports the cable (1), unwound from a roll, in the direction of its longitudinal axis, and of a second conveyor (13), arranged downstream of the length-cutting device (24, 25, 26), which is formed by two endless belts (22, 23), which transport the cable (1) further, clamped between them, perpendicular to the cable axis, and of a pusher (18), which pushes the cable (1) perpendicular to its longitudinal axis into the intake of the two endless belts (22, 23) characterised in that a guide sleeve (28), which surrounds the cable (1) and follows the direction of movement of the pusher (18) when the cable (1) is inserted between the two endless belts (22, 23) is arranged between the first conveyor (2) and the length-cutting device (24, 25, 26).

2. Transport device according to Claim 1, characterised in that the guide sleeve (28) is swivelled about an axis (27) in accordance with the direction of movement of the pusher (18).

3. Transport device according to Claim 2, characterised in that the swivel axis (27) is located near the inlet opening of the guide sleeve (28).

4. Transport device according to one of the preceding claims, characterised in that the guide sleeve (28) is coupled non-positively to the pusher (18).

5. Transport device according to one of the preceding claims, characterised in that the movable blade (25) of the length-cutting device is firmly connected to the pusher (18).

6. Transport device according to Claim 5, characterised in that the side of the pusher (18) pointing towards the length-cutting device (24, 25) is constructed as the blade (25) of the length-cutting device.

7. Transport device according to one of the preceding claims, characterised in that the non-positive coupling between the guide sleeve (28) and the pusher (18) is released with the start of the cutting process, and the guide sleeve (28) comes to bear on a stop (37).

8. Transport device according to one of the preceding claims, characterised in that the swivellable guide sleeve (28) is pulled or pressed by spring force in the direction of cutting against a stop (30) connected to the pusher (18), and is lifted therefrom at the start of the cutting process.

9. Transport device according to Claim 8, characterised in that the lifting of the guide sleeve (28) from the stop (30) connected to the pusher (18) is effected when the guide sleeve (28) strikes against a fixed stop (37) and the pusher (18) continues.

10. Transport device according to one of the preceding claims, characterised in that the guide sleeve (28) is connected positively to a part (26) of the length-cutting device, and the latter is connected, in turn, non-positively to the pusher (18).

11. Transport device according to one of the preceding claims, characterised in that the part (26) which is fastened to the swivellable end (31) of the guide sleeve (28) and swivels the guide sleeve is connected via a spring (33) to the pusher (18) or to the movable blade (25) and is pressed by the spring (33) against a stationary stop (37) during the cutting process.

12. Transport device according to Claim 11, characterised in that an annular blade (38) which forms the stationary blade during the cutting process is inserted into the part (26) swivelling the guide sleeve (28).

## Revendications

1. Dispositif transporteur pour un automate de traîtement de câble, composé d'un premier transporteur (2), disposé en amont du dispositif de coupe à longueur et qui transporte le câble (1), déroulé d'une bobine, parallèlement à son axe longitudinal, d'un deuxième transporteur (13), disposé en aval du dispositif de coupe à longueur (24, 25, 26) et qui est formé de deux courroies sans fin (22, 23) qui transportent le câble (1) perpendiculairement à son axe en le serrant entre elles, et d'un poussoir (18) qui pousse le câble (1) dans l'entrée des deux courroies sans fin (22, 23) par un déplacement perpendiculaire à son axe longitudinal, caractérisé en ce qu'entre le premier transporteur (2) et le dispositif de coupe à longueur (24, 25, 26), est interposé un manchon de guidage (28) qui entoure le câble (1) et qui accompagne le sens du mouvement du poussoir (18) au moment de l'engagement du câble (1) entre les deux courroies sans fin (22, 23).

2. Dispositif transporteur selon la revendication 1, caractérisé en ce que le manchon de guidage (28) pivote autour d'un axe (27), dans la direction du mouvement du poussoir (18).

3. Dispositif transporteur selon la revendication 2, caractérisé en ce que l'axe de pivotement (27) se trouve à proximité de l'ouverture d'entrée du manchon de guidage (28).

4. Dispositif transporteur selon une des revendications précédentes, caractérisé en ce que le manchon de guidage (28) est couplé au poussoir (18) par une liaison opérant par action de force.

5. Dispositif de transport selon une des revendications précédentes, caractérisé en ce que la lame mobile (25) du dispositif de coupe à longueur est assemblée rigidement au poussoir (18).

6. Dispositif de transport selon la revendication 5, caractérisé en ce que le côté du poussoir (18) qui est dirigé vers le dispositif de coupe à longueur (24, 25) forme une lame (25) du dispositif de coupe à longueur.

7. Dispositif de transport selon une des revendications précédentes, caractérisé en ce que la liaison opérant par action de force qui est établie entre le manchon de guidage (28) et le poussoir (18) est supprimé au début de l'opération de coupe et le manchon de guidage (28) vient en appui contre une butée (37).

8. Dispositif de transport selon une des revendications précédentes, caractérisé en ce que le manchon de guidage pivotant (28) est attiré ou appliqué contre une butée (30) solidaire du poussoir (18), par une force élastique agissant dans le sens de la coupe, et s'éloigne de cette butée au début de l'opération de coupe.

9. Dispositif de transport selon la revendication 8, caractérisé en ce que l'éloignement du manchon de guidage (28) par rapport à la butée (30) solidaire du poussoir (18) est obtenu par le fait que le manchon de guidage (28) bute contre une butée fixe (37) tandis que le poussoir (18) poursuit son avance.

10. Dispositif de transport selon une des revendications précédentes, caractérisé en ce que le manchon de guidage (28) est assemblé, par une liaison opération par sûreté de forme, à une partie (26) du dispositif de coupe à longueur et que cette partie est à son tour assemblée au poussoir (18) par une liaison opérant par action de force.

11. Dispositif de transport selon une des revendications précédentes, caractérisé en ce que la partie (26) qui est fixée à l'extrémité pivotante (31) du manchon de guidage (28) et qui fait pivoter ce manchon de guidage, est reliée au poussoir (18) ou à la lame mobile (25) par l'intermédiaire d'un ressort (33) et, au moment de l'opération de coupe, elle est pressée contre une butée fixe (37) par le ressort (33).

12. Dispositif de transport selon la revendication 11, caractérisé en ce qu'une lame annulaire (38) est formée dans la partie (26) qui fait pivoter le manchon de guidage (28), cette lame formant la lame qui reste fixe pendant l'opération de coupe.

Fig.1

Fig.2

EP 0 171 508 B1

Fig. 3 (Schnitt B-B)

Fig. 4 (Schnitt A-A)

8

Fig. 5

Fig.6